Europäisches Patentamt

European Patent Office

Office européen des brevets

(11) Publication number: **0 122 063**
**B1**

(12) **EUROPEAN PATENT SPECIFICATION**

(45) Date of publication of patent specification: **28.05.86**

(51) Int. Cl.⁴: **B 01 J 29/08, C 10 G 11/05**

(21) Application number: **84301704.7**

(22) Date of filing: **13.03.84**

(54) A hydrocarbon conversion catalyst and use thereof.

(30) Priority: **14.03.83 US 474998**

(43) Date of publication of application:
**17.10.84 Bulletin 84/42**

(45) Publication of the grant of the patent:
**28.05.86 Bulletin 86/22**

(84) Designated Contracting States:
**AT BE CH DE FR GB IT LI NL SE**

(56) References cited:
**DE-A-3 011 610**
**GB-A-1 503 808**
**GB-A-2 023 167**
**US-A-3 531 397**

(73) Proprietor: **UOP Inc.**
**10 UOP Plaza Algonquin & Mt. Prospect Roads**
**Des Plaines Illinois 60016 (US)**

(72) Inventor: **Hilfman, Lee**
**1426 Bridgeport Drive**
**Mount Prospect Illinois 60056 (US)**

(74) Representative: **Hale, Stephen Geoffrey et al**
**J.Y. & G.W. Johnson Furnival House 14/18 High**
**Holborn**
**London WC1V 6DE (GB)**

EP 0 122 063 B1

Courier Press, Leamington Spa, England.

## Description

This invention relates to hydrocarbon conversion catalysts comprising silica and an aluminosilicate and to their use.

In the field of hydrocarbon conversion catalysts, amorphous silica-alumina was a pioneer material both as a catalyst and as a carrier material for other catalytic components. After the discovery of amorphous silica-alumina catalysts, crystalline aluminosilicates or zeolites were discovered to have significant catalytic properties which overshadowed the catalytic properties of the amorphous forms. The zeolite catalysts were made from either natural or synthetic zeolites and have been developed for hydrocarbon hydroconversion for twenty years or more. Known zeolites include the natural zeolites, faujasite, mordenite, erionite and chabazite and the synthetic zeolites A, L, S, T, X and Y. In general, zeolites are metal aluminosilicates having a crystalline structure such that a relatively large adsorption area is present inside each crystal. Zeolites consist basically of three-dimensional frameworks of $SiO_4$ and $AlO_4$ tetrahedra with the tetrahedra cross-linked by the sharing of oxygen atoms. The electrovalence of the tetrahedra containing aluminium is balanced by the inclusion of cations in the crystal, for example metal ions, ammonium ions, amine complexes or hydrogen ions. The spaces in the pores may be occupied by water or other adsorbate molecules. Normally, the crystalline zeolites occur, or are prepared, in the sodium or potassium form.

The prior art catalysts have suffered from the disadvantage of converting a certain amount of hydrocarbon feedstock to coke which is deposited on the surface of the catalyst and elsewhere. When the accumulation of coke becomes too great thereby reducing the effectiveness of the catalyst, regeneration of the catalyst must be performed to restore the initial hyderocarbon conversion activity. Of course, the regeneration step is inherently non-productive and those skilled in the catalyst formulation art continually strive to develop new catalysts which demonstrate a resistance to coke-forming tendencies.

The prior art also teaches in U.S.—A—3,531,397 that crystalline aluminosilicates in general may be dispersed in a silica matrix and that the resulting catalysts may be used for hydrocarbon conversion. That patent, however, does not teach or exemplify the incorporation of stabilized Y zeolite in a silica matrix.

It has now been discovered that a new hydrocarbon conversion catalyst comprising silica and a stabilized type Y zeolite demonstrates excellent conversion capability while yielding significantly lower coke yields.

According to the invention there is provided a hydrocarbon conversion catalyst comprising silica and a stabilized Y zeolite. The stabilized Y zeolite may be characterized as an organophilic zeolitic aluminosilicate having a chemical $SiO_2/Al_2O_3$ molar ratio of from 4.5/1 to 6/1, the essential x-ray powder diffraction pattern of zeolite Y, a BET surface area of at least 350 $m^2/g$ and an adsorption capacity for water vapour at 25°C and a water vapour pressure of 320 Pa (2.4 Torr) of from 6 to 12 wt.%.

Preferably, the stabilized Y zeolite is rare-earth-exchanged. The rare-earth exchange may be performed in any known or convenient manner.

This invention also provided a hydrocarbon conversion process which comprises contacting a hydrocarbon at hydrocarbon conversion conditions with a catalyst according to the invention.

The hydrocarbon conversion catalyst according to the invention can be prepared by admixing a finely divided stabilized Y zeolite with an aqueous colloidal silica sol, drying the resulting mixture, and calcining the dried mixture.

The stabilized Y zeolite may be obtained commercially from the Union Carbide Corporation which designates such material as "LZ—Y20. The"LZ—Y20" type of material is reported to be a distinct derivative of synthetic Y zeolite and demonstrates significantly improved catalytic properties. As mentioned hereinabove, crystalline aluminosilicates or zeolites, in general, are described as a three dimensional network of fundamental structural units consisting of silicon-centered $SiO_4$ and aluminium-centered $AlO_4$ tetrahedra interconnected by a mutual sharing of apical oxygen atoms. The space between the tetrahedra is occupied by water molecules and subsequent dehydration or partial dehydration results in a crystal structure interlaced with channels of molecular dimension.

The adsorptive capacity for water vapour, at 25°C and a water vapour pressure of 320 Pa (2.4 Torr), of from 6 to 12 wt.% for the stabilized Y zeolite may be compared to water adsorptive capacity for ordinary zeolite Y under similar conditions of from 20 to 25 wt.%.

Surface areas of LZ—Y20 and other stabilized Y zeolite may be determined by the well-known Brunauer-Emmett-Teller method (B-E-T) (S. Brunauer, P. Emmett and E. Teller, J. Am. Chem. Soc. 60, 309 [1938]) using nitrogen as the adsorbate.

The essential X-ray powder diffraction pattern of zeolite Y is set forth in U.S.—A—3,130,007 (Breck). It will be understood that the shrinkage of the unit cell resulting from the stabilization process for converting zeolite Y to stabilized Y zeolite will cause some slight shift in the d-spacings. In all events, the X-ray diffraction pattern of the stabilized Y zeolite compositions will exhibit at least the d-spacings corresponding to the Miller Indices of Table A below, and can contain all the other d-spacings permissible to the face centered cubic system with a unit cell edge of 24.20 to 24.45 Angstroms. This may be compared to a unit cell edge of 24.7 Angstroms for Y-zeolite. The value of the d-spacings in Angstroms can be readily calculated by substitution in the formula:

$$d_{hkl} = \frac{a_0}{(h^2+k^2+l^2)^{1/2}}$$

where h, k and I are the Miller indices.

The X-ray pattern of the stabilized Y zeolite may be obtained by standard X-ray powder techniques. The radiation source is a high intensity, copper target, X-ray tube operated at 50 Kv and 40 ma. The diffraction pattern from the copper K radiation and graphite monochromator is suitably recorded by an X-ray spectrometer scintillation counter, pulse height analyzer and strip chart recorder. Flat compressed powder samples are scanned at 1° per minute, using a 2 second time constant. Interplanar spacings (d) are obtained from Bragg Angle (2 theta) positions of peaks after subtracting background. The crystal symmetry is cubic.

### TABLE A

| Miller Indices (hkl) | Intensity |
| --- | --- |
| 111 | very strong |
| 220 | medium |
| 311 | medium |
| 331 | strong |
| 333; 511 | medium |
| 440 | medium |
| 533 | strong |
| 642 | strong |
| 751; 555 | strong |

The anhydrous state of any zeolite composition for purposes of determining constituent proportions in terms of weight percent is the condition of the zeolite after being fired in air at 1000°C for one hour.

For the determination of the sorptive capacity of the stabilized Y zeolite for any particular adsorbate for example water, the test zeolite sample is activated by preheating at 425°C for 16 hours at a pressure of 5 micrometers of mercury (0, 67 Pa) in a conventional McBain apparatus. Thereafter, the temperature of the sample is adjusted to the desired value and contacted with the vapour of the test adsorbate at the desired pressure.

According to this invention, the stabilized Y zeolite is preferably initially exchanged using a rare earth salt solution, water washed, dried and calcined. The rare earth-exchanged "stabilized Y zeolite" is then admixed with silica. The rare earth-exchanged, stabilized Y zeolite may be composited with the silica in any convenient method known in the prior art. For example, one method for preparing the catalyst is admixing the finely divided "stabilized Y zeolites" with finely divided silica and forming a desired catalyst shape such as rods, pills, pellets, tablets, granules, extrudates and the like forms. Another example of a method for preparing the catalyst is by mixing the finely divided "stabilized Y zeolite" into an aqueous colloidal dispersion of silica particles and drying and calcining the resulting admixture. Such aqueous colloidal dispersions of silica particles are commercially available on a large scale from the E.I duPont de Nemours & Co. under the trade name Ludox Colloidal Silica, the Nalco Chemical Co. under the trade name Nalcoag and others. In the event aqueous colloidal silica is selected as a precursor for the catalyst of the present invention, it is preferred that the sodium level be minimixed for best results.

The catalyst of the present invention preferably contains from about 5 to about 95wt.% stabilized Y zeolite. Regardless of the method of preparing the admixture of stabilized Y zeolite and silica, the composition is preferably dried at a temperature from about 88°C to about 260°C (190° to 500°F) or more for about 2 to about 24 hours or more and then calcined at a temperature from about 370°C to about 700°C (700° to 1300°F) for about 0.5 to about 12 hours or more. It is preferred that preformed particles be dried slowly and also that the drying be effected in a humid atmosphere since it has been found to result in less breakage of discrete catalyst particles.

Optional ingredients for the catalyst of the present invention may be selected from Group IV-A, V-B, V-A, VI-B, VII-A, VII-B and VIII of the Periodic Table of the Elements. More specifically the optional ingredients which may be incorporated with the catalyst of the present invention are germanium, tin, lead, vanadium, niobium, tantalum, phosphorus, arsenic, antimony, bismuth, chromium, molybdenum, tungsten, manganese, technetium, rhenium, fluorine, chlorine, bromine, iodine, iron, cobalt, nickel, rithenium, rhodium, palladium, osmium, iridium and platinum.

The optional ingredients may be incorporated in the catalyst in any suitable manner known to result in a relatively uniform distribution of the ingredients such as ion exchange and/or impregnation. A suitable method of introducing an optional ingredient involves the utilization of a soluble compound to impregnate the catalyst. Another acceptable procedure for incorporation of an optional ingredient is by adding the ingredient or a compound thereof to the initial step of compounding the silica and stabilized Y zeolite.

Suitable optional ingredients and their methods of incorporation are selected to enhance the desired characteristics of the finished catalyst depending upon the type of hydrocarbon conversion process which utilizes the catalyst. Not all ingredients and incorporation methods will give equivalent results.

Regardless of the details of how the optional components are combined with the catalyst of the present invention, the final catalyst generally will be dried at a temperature of about 88°C to about 260°C (190 to 500°F) for a period of typically about 1 to about 24 hours or more and finally calcined or oxidized at a temperature of about 370°C to about 700°C (700 to 1300°F) in an air or oxygen atmosphere for a period of about 0.5 to about 10 or more hours.

To carry out hydrocarbon conversion using the catalyst of the invention, a hydrocarbon charge stock is contacted with the catalyst in a hydrocarbon conversion zone. This contacting may be accomplished by using the catalyst in a fixed bed system, a moving bed system, a fluidized bed system or in a batch type operation. It is, of course, understood that a conversion zone may be one or more separate reactors with suitable means therebetween to ensure that the desired conversion temperature is maintained at the entrance to each reactor. It is also important to note that the reactants may be contacted with a catalyst bed in either upward, downward or radial flow fashion. In addition, the reactants may be in the liquid phase, a mixed liquid-vapour phase, or a vapour phase when they contact the catalyst.

The hydrocarbon charge stock subjected to hydrocarbon conversion is suitable a hydrocarbon fraction boiling in the range from about 90°C to about 650°C (200 to 1200°F). It is reacted at hydroconversion conditions, which may include the presence of hydrogen, a pressure from about atmospheric pressure to about 20,700 kPa gauge (3000 psig) and a temperature from about 260°C to about 590°C (500 to 1100°F).

Petroleum hydrocarbon fractions which can be utilized as charge stocks thus include the gas oils, fuel oil, kerosene, etc., recovered as distillate in the atmospheric distillation of crude oils, also the light and heavy vacuum gas oils resulting from the vacuum distillate of the reduced crude, the light and heavy cycle oils recovered from the catalytic cracking process, light and heavy coker gas oils resulting from low pressure coking, coal tar distillates and the like. Residual oils, often referred to as asphaltum oil, liquid asphalt, black oil, residuum, etc., obtained as liquid or semiliquid residues after the atmospheric or vacuum distillation of crude oils, are usable in this process althouth it may be desirable to blend such oils with lower boiling petroleum hydrocarbon fractions for economical operation. Hydrocarbon charge stocks may boil substantially continuously from about 90°C to about 650°C (200 to 1200°F), or may consist of any one, or a number of hydrocarbon fractions, such as are set out above, which distil over within the 90°-650°C (200 to 1200°F) range. Other suitable hydrocarbon feedstocks include hydrocarbons derived from tar sand, oil shale and coal.

Since the petroleum hydrocarbons and other hydrocarbons which canm be hydroprocessed according to the process of this invention boil over a wide range, it may be readily perceived that suitable reaction temperatures will lie within a correspondingly wide range, the preferred temperature ranges depending in each instance upon the particular petroleum hydrocarbon fraction utilized as a charge stock. For example, reaction temperatures from about 260°C to 590°C (500 to 1100°F) are generally operable. However, where the particular hydrocarbon fraction utilized boils within the range from about 370°C (700°F) to about 480°C (900°F) and is converted in the presence of hydrogen, it is preferred to operate at reaction temperatures in the more restricted range from about 260°C to about 430°C (500 to 800°F). Hydrocarbon conversion processes which are contemplated for the present invention include for example desulfurization, denitrification, hydrogenation, hydrocracking, reforming, isomerization, transalkylation and fluid catalytic cracking (FCC).

When the hydrocarbon charge stock is converted in the presence of hydrogen, the pressure is preferably from about 2,070 kPa gauge to about 20,700 kPa gauge (300 to 3000 psig). The hydrogen circulation rate is preferably from about 14 std m³ to about 565 std m³ (500 to 20,000 standard cubic feet) per barrel (barrel (petroleum, U.S.) ≃ 159 I) of charge stock, although amounts from about 5.65 std m³ (200 standard cubic feet) to as much as 850 std m³ (30,000 standard cubic feet) per barrel are operable. The liquid hourly space velocity of the petroleum hydrocarbon charge stock is preferable from about 0.2 to about 10 depending on the particular charge employed and the reaction temperatures necessitated thereby. A suitable correlation between space velocity and reaction temperature can be readily determined by one skilled in the art in any particular instance. When utilizing a charge stock boiling in the range from about 370°C to about 480°C (700 to 900°F), a liquid hourly space velocity from about 1 to about 3 is preferred.

In the case where the hydrocarbon conversion reaction of the present invention is conducted in a fluid catalytic cracking (FCC) process and no hydrogen is added to the hydrocarbon conversion zone, the reaction conditions may include a pressure from about 34 kPa gauge to about 1034 kPa gauge (5 to 150 psig), a temperature from about 427°C to about 590°C (800 to 1100°F), a catalyst to oil ratio from about 1 to about 10, a weight hourly space velocity from about 1 to about 50 and a residence time from about 1 second to about 1 minute or more.

The following example is given to illustrate further the preparation of the catalytic composite of the present invention and the use thereof in the conversion of hydrocarbons. This example is intended to be illustrative rather than restrictive.

### Example

In accordance with the present invention, a commercially available aqueous colloidal silica having a low sodium content was selected as a component for the preparation of the catalyst of the present invention. This colloidal silica was admixed with a sufficient quantity of finely divided stabilized Y zeolite to yield a finished catalyst containing 70 wt.% silica and 30 wt.% stabilized Y zeolite. Prior to the admixture, the stabilized Y zeolite was rare earth exchanged. The resulting admixture was dried at 102°C (215°F) for about 16 hours and then calcined at 700°C (1300°F) for about one hour. The resulting calcined catalyst was ground to yield particles which ranged in size from about −30 to about +100 mesh and steamed at 774°C (1425°F) for about 12 hours.

A first reference catalyst was prepared by admixing a finely divided, conventional Y zeolite with a low-sodium-content colloidal silica, as mentioned above, to yield a finished catalyst containing 80 wt.% silica and 20 wt.% conventional Y zeolite. Prior to the admixture, the Y zeolite was rare-earth exchanged. The resulting admixture was dried at 102°C (215°F) for about 16 hours and then calcined at 700°C (1300°F) for about one hour. The resulting calcined catalyst, hereinafter referred to as Reference Catalyst A, was ground to yield particles which ranged in size from about −30 to about +100 mesh steamed at 774°C (1425°F) for about 12 hours.

A second reference catalyst, hereinafter referred to as Reference Catalyst B, was prepared by admixing a finely divided conventional Y zeolite with a low-sodium-content colloidal silica as mentioned above to yield a finished catalyst containing 70 wt.% silica and 30 wt.% conventional Y zeolite. Prior to the admixture, the Y zeolite was rare-earth exchanged. The resulting admixture was dried at 102°C (215°F) for about 16 hours and then calcined at 700°C (1300°F) for about one hour. The resulting calcined catalyst was ground to yield particles which ranged in size from about −30 to about +100 mesh and steamed at 774°C (1425°F) for about 12 hours.

Each of the hereinabove described catalysts was separately tested according to ASTM Method D 3907-80 which is also known as the Standard Method for Testing Fluid Cracking Catalysts by Microactivity Test or more simply known as the MAT test.

Catalyst A was tested according to the standardized MAT test conditions and was found to convert 70 wt.% of the gas oil feedstock to hydrocarbons boiling below 230°C (450°F) with a corresponding coke yield of 1.4 wt.% of the feedstock. Under the MAT test conditions, Catalyst B was found to convert 50 wt.% of the gas oil feedstock to hydrocarbons boiling below 230°C (450°F) with a corresponding coke yield of 0.8 wt.% of the feedstock. The catalyst of the present invention, under MAT test conditions, converted 59 wt.% of the gas oil feedstock to hydrocarbons boiling below 230°C (450°F) with a corresponding coke yield of only 0.4 wt.% of the feedstock. The results of these tests are summarized in Table I.

TABLE I
Summary of Results

| Catalyst | Conversion, wt.% | Coke yield wt.% |
|---|---|---|
| A | 50 | 0.8 |
| B | 70 | 1.4 |
| Catalyst of the Present Invention | 59 | 0.4 |

This summary clearly demonstrates surprising and unexpected results caused by the incorporation of a stabilized Y zeolite in a silica matrix. Even though the catalyst of the present invention with an initial stabilized Y zeolite concentration of 30 wt.% demonstrated a conversion of 59 while Catalyst B which contained an initial Y zeolite concentration of 30 wt.% demonstrated a conversion of 70, the catalyst of the present invention only produced 28.5% of the coke produced by Catalyst B. When the catalyst of the present invention with an initial 30 wt.% stabilized Y zeolite and 59% conversion is compared with Catalyst A with an initial 20 wt.% Y zeolite and 50% conversion, the catalyst of the present invention only produced 50% of the coke produced by Catalyst A. Although the catalyst of the present invention appears to be slightly less active, this drawback is more than overcome by the substantial reduction in coke yield. Coke yield is proportional to that portion of the feedstock which is consumed and will no longer be able to be recovered as a useful hydrocarbon component. Therefore, in order to obtain maximum hydrocarbon production, the coke yield must be minimized. In a fluid catalytic cracking process, any slight reduction in catalyst activity of a low-coke producing catalyst can be easily overcome by simply increasing the flow rate of the regenerated catalyst to the riser which acts as the hydrocarbon conversion zone. The foregoing analysis readily shows that the catalysts of the present invention comprising silica and a stabilized Y zeolite demonstrate a remarkable and unexpected ability for hydrocarbon conversion.

**Claims**

1. A hydrocarbon conversion catalyst which comprises silica and an aluminosilicate, characterised in that the aluminosilicate is an organophilic zeolitic aluminosilicate which is a stabilized Y zeolite having a chemical $SiO_2/Al_2O_3$ molar ratio of from 4.5/1 to 6/1, the essential x-ray powder diffraction pattern of zeolite Y, a BET surface area of at least 350 $m^2/g$ and an adsorptive capacity for water vapour at 25°C and a water vapour pressure of 320 Pa (2.4 Torr) of from 6 to 12 wt.%.

2. A catalyst as claimed in Claim 1, characterised in that the silica is present in an amount from about 5 to about 95 wt.%.

3. A catalyst as claimed in Claim 1 or 2, characterised in that the stabilized Y zeolite is present in an amount from about 5 to about 95 wt.%.

4. A catalyst as claimed in any Claims 1 to 3, characterised in that the stabilized Y zeolite is rare-earth-exchanged.

5. A catalyst as claimed in any of Claims 1 to 4, , characterised in that a component selected from Groups IV-A, V-B, V-A, VI-B, VII-A, VII-B AND VIII of the Periodic Table of the Elements is present.

6. A catalyst as claimed in any of Claims 1 to 5, characterised in that it has been prepared by admixing a finely divided stabilized Y zeolite with an aqueous colloidal silica sol, drying the resulting mixture and calcining the dried mixture.

7. A hydrocarbon conversion process which comprises contacting a hydrocarbon at hydrocarbon conversion conditions with a hydrocarbon conversion catalyst, characterised in that the catalyst is a catalyst as claimed in any of claims 1 to 6.

8. A process as claimed in claim 7, characterised in that the process is fluid catalytic cracking.

9. A process as claimed in claim 8, characterised in that the fluid catalytic cracking is carried out at a temperature from about 427 to about 590°C (800 to 1100°F), a pressure from about 34 to about 1034 kPa gauge (5 to 150 psig), a catalyst to oil ratio from about 1/1 to about 10/1, a weight hourly space velocity from about 1 to about 50 and a residence time from about 1 second to about 1 minute.

**Patentansprüche**

1. Katalysator für die Umwandlung von Kohlenwasserstoffen, bestehend aus Siliciumdioxyd und einem Aluminosilikat, dadurch gekennzeichnet, dass als Aluminosilikat ein organophiles zeolithsches Aluminosilikat vorliegt, welches einen stabilisierten Y-Zeolith mit einem chemischen $SiO_2/Al_2O_3$-Molverhältnis von 4,5/1 bis 6/1, im wesentlichen dem Röntgenpulverbeugungsbild des Zeolithes Y, einer BET-Oberfläche von mindestens 350 $m^2/g$ und einem Wasserdampfadsorptionsvermögen von 6 bis 12 Gew.-% bei 25°C und einem Wasserdampfdruck von 320 Pa (2, 4 Torr) darstellt.

2. Katalysator nach Anspruch 1, dadurch gekennzeichnet, dass Siliciumdioxyd in einer Menge von etwa 5 bis etwa 95 Gew-% vorliegt.

3. Katalysator nach Anspruch 1 oder 2, dadurch gekennzeichnet, dass der stabilisierte Y-Zeolith in einer Menge von etwa 5 bis etwa 95 Gew-% vorliegt.

4. Katalysator nach einem der Ansprüche 1 bis 3, dadurch gekennzeichnet, dass der stabilisierte Y-Zeolith mit seltenen Erden ausgetauscht ist.

5. Katalysator nach einem der Ansprüche 1 bis 4, dadurch gekennzeichnet, dass eine aus den Gruppen IV-A, V-B, V-A, VI-B, VII-A, VII-B und VIII des periodischen Systems der Elemente ausgewählte Komponente vorliegt.

6. Katalysator nach einem der Ansprüche 1 bis 5, dadurch gekennzeichnet, dass es durch Vermischen eines feinverteilten stabilisierten Y-Zeoliths mit einem wässrigen kolloidalen Siliciumdioxydsol, Trocknen des so erhaltenen Gemischs und Glühen des getrockneten Gemischs erhalten wurde.

7. Verfahren zur Umwandlung von Kohlenwasserstoffen, bei dem man einen Kohlenwasserstoff unter Kohlenwasserstoffumwandlungsbedingungen mit einem Katalysator für die Umwandlung von Kohlenwasserstoffen zussammenbringt, dadurch gekennzeichnet, dass als Katalysator ein Katalysator nach einem der Ansprüche 1 bis 6 vorliegt.

8. Verfahren nach Anspruch 7, dadurch gekennzeichnet, dass das Verfahren die katalytische Wirbelschichtspaltung ist.

9. Verfahren nach Anspruch 8, dadurch gekennzeichnet, dass die katalytische Wirbelschichtspaltung bei einer Temperatur von etwa 427 bis etwa 590°C (800 bis 1100°F), einem Ueberdruck von etwa 34 bis etwa 1034 kPa (5 bis 150 psig), einem Katalysator/Oelverhältnis von etwa 1:1 bis etwa 10:1, einer gewichtsbezogenen stündlichen Raumgeschwindigkeit von etwa 1 bis etwa 50 und einer Verweilzeit von etwa 1 Sekunde bis etwa 1 Minute durchgeführt wird.

**Revendications**

1. Un catalyseur pour la conversion d'hydrocarbures qui comprend de la silice et un aluminosilicate, caractérisé en ce que l'aluminosilicate est un aluminosilicate zéolithique organophile qui est une zéolithe Y stabilisée ayant un rapport molaire chimique $SiO_2/Al_2O_3$ compris entre 4,5/1 et 6/1, essentiellement le diagramme par diffraction des rayons-X de la poudre de la zéolithe Y, une surface spécifique BET d'au moins 350$m^2/gr$ et une capacité d'adsorption de la vapeur d'eau à 25°C et à une pression de vapeur d'eau de 320 Pa (2, 4 Torr) comprise entre 6 et 12% en poids.

2. Un catalyseur selin la revendication 1, charactérisé en ce que la silice est présente en quantité comprise entre environ 5 et environ 95% en poids.

3. Un catalyseur selon la revendication 1 ou 2, caractérisé en ce que la zéolithe Y stabilisée est présente en quantité comprise entre environ 5 et environ 95% en poids.

4. Un catalyseur selon l'une quelconque des revendications 1 à 3, caractérisé en ce que la zéolithe Y stabilesée est échangée aux terres rares.

5. Un catalyseur selon l'une quelconque des revendications 1 à 4, caractérisé en ce qu'un composant choisi parmi les groupes IV-A, V-B, V-A, VI-B, VII-A Elemènts est présent.

6. Un catalyseur selon l'une quelconque des revendications 1 à 5, caractérisé en ce qu'il a été préparé en mélangeant une zéolithe Y stabilisée, finement divisée, avec un sol de silice colloïdale aqueuse, en séchant le mélange résultant et en calcinant le mélange séché.

7. Un procédé de conversion d'hydrocarbures qui comprend la mise en contact d'un hydrocarbure à des conditions de conversion d'hydrocarbures avec un catalyseur pour la conversion d'hydrocarbures, caractérisé en ce que le catalyseur est un catalyseur selon l'une quelconque des revendications 1 à 6.

8. Un procédé selon la revendication 7, caractérisé en ce que le procédé est le craquage catalytique fluide.

9. Un procédé selon la revendication 8, caractérisé en ce que le craquage catalytique fluide est effectué à une température comprise entre environ 427 et environ 590°C (800 à 1100°F), une pression comprise entre environ 34 et environ 1034 kPa au manomètre (5 à 150 psig), un rapport catalyseur-pétrole compris entre environ 1/1 et environ 10/1, une vitesse spatiale horaire en poids comprise entre environ 1 et environ 50 et un temps de résidence compris entre environ 1 seconde et environ 1 minute.